# EUROPÄISCHE PATENTSCHRIFT

(11) **EP 3 670 759 B1**
(45) Veröffentlichungstag und Bekanntmachung des Hinweises auf die Patenterteilung: **30.11.2022**
(21) Anmeldenummer: 19204894.0
(22) Anmeldetag: 23.10.2019
(51) Int. Cl.: E02F 5/00

(54) **VORRICHTUNG UND VERFAHREN ZUM VERLEGEN VON KABELN UND/ODER LEITUNGEN IM BODEN**
DEVICE AND METHOD FOR LAYING CABLES AND / OR LINES IN THE GROUND
DISPOSITIF ET PROCÉDÉ DE POSE DE CÂBLES ET / OU DE CONDUITES DANS LE SOL

(30) Priorität: 21.12.2018 DE 202018107405 U
(43) Veröffentlichungstag der Anmeldung: 24.06.2020
(73) Patentinhaber: Stehr, Jürgen, 36318 Schwalmtal/Storndorf (DE)
(72) Erfinder: Stehr, Jürgen, 36318 Schwalmtal/Storndorf (DE)
(74) Vertreter: Benninger, Johannes

(56) Entgegenhaltungen:
- EP-A1- 2 239 377
- WO-A1-2018/045404

## Beschreibung

Die vorliegende Erfindung betrifft eine Vorrichtung sowie ein Verfahren zum Verlegen von Kabeln und/oder Leitungen im Boden gemäß den Merkmalen der unabhängigen Ansprüche.

Zum Verlegen von Kabeln und Leitungen im Erdreich haben sich verschiedene Verfahren etabliert. Neben sogenannten Bodenverdrängungshämmern gibt es einige weitere Verfahren zum Verlegen von Kabeln oder Leitungen. Insbesondere haben sich in der Praxis Verlegeeinheiten durchgesetzt, mittels welcher durch Pflugvorrichtungen der Boden aufgeschlitzt und gelockert wird. Durch an der Pflugvorrichtung angeordnete Kabeldurchführungen können Kabel oder Leitungen extern zugeführt werden oder durch am Pflug positionierte Vorratstrommeln Kabel oder Leitungen auf der Pflugsohle beziehungsweise im durch den Pflug gelockerten Boden abgelegt werden.

Diese Vorgehensweise ist bei asphaltierten betonierten, steinigen oder anderweitig luft- und/oder wasserdicht versiegelten Bodenschichten nicht möglich. Hier hat sich das Auffräsen bewährt. Allgemein ergibt sich beim Erstellen schmaler Gräben unter asphaltierten, steinigen, betonierten oder anderweitig versiegelten Bodenschichten das Problem, dass dabei das Erdreich oder die Frostschutzschicht unter der versiegelten Bodenschicht einrutscht. Bei der Wiederverfüllung der Gräben besteht weiterhin das Problem, dass die herkömmlichen Verdichtungsgeräten nicht in der Lage sind, die Bodenbereiche zu verdichten, die sich unterhalb der versiegelten Bodenschicht befinden. Durch eine nicht ordnungsgemäß durchgeführte Verdichtung und einem dadurch bedingt zu geringen Verdichtungsgrad der unter der versiegelten Bodenschicht liegenden Tragschicht können sich Hohlräume bilden. Weil das obenliegende Material nicht mehr ausreichend durch den Untergrund gestützt wird, ist die grundsätzliche Tragfähigkeit nicht mehr gewährleistet. Auch lässt die Bruchfestigkeit des obenliegenden Materials nach einiger Zeit nach, womit Rissbildungen einhergehen können. In der Folge kann es in Frostperioden zu Frostschäden und damit zu Folgeschäden kommen. Folgeschäden bedeuten einerseits einen Mehraufwand, aber auch hohe Folgekosten zur Instandsetzung der entstandenen Schäden.

Zum Anlegen von Gräben für Leitungen, Kabel etc. ist aus dem Stand der Technik bereits eine Vielzahl an Grabenfräsen bekannt.

Eine Fräse, welche zum Anlegen von Gräben verwendet werden kann, wird beispielsweise durch das europäische Patent mit der Veröffentlichungsnummer EP 2 735 654 B1 beschrieben. Dort ist eine Radgrabvorrichtung zum Verlegen von Kabeln in Böden offenbart. Die Radgrabvorrichtung umfasst ein hydraulisch angetriebenes Grabenrad zum Herstellen eines schmalen Grabens im Boden zur Kabelverlegung. Die Radgrabvorrichtung ist als Hilfsgerät für ein Arbeitsfahrzeug ausgebildet und dort mittels Dreipunktverbindungseinrichtung befestigbar. Die Radgrabvorrichtung umfasst weiterhin einen Hydraulikkreislauf mit einer Hydraulikpumpe, welche durch einen Nebenantrieb des Arbeitsfahrzeugs antreibbar ist, und einen Hydraulikmotor, welcher hydraulisch mit der Pumpe verbunden ist, um das Grabenrad in Rotation zu versetzen. Der Hydraulikkreislauf ist dabei unabhängig und getrennt vom Arbeitsfahrzeug.

Es kann sein, dass nach der Eröffnung eines mit einer solchen Radgrabvorrichtung gebildeten Grabens wieder Erdreich in den Graben zurückgelangt und der Graben teilweise wieder aufgefüllt wird beziehungsweise keine zumindest annähernd ebene Grabensohle vorhanden ist. Auch kann es sein, dass entstandene Hohlräume nicht rückverdichtet werden, was die Stabilität der Grabenseitenwände beeinträchtigt als auch die Tragfähigkeit des vorhandenen Bodens schwächt. Die Praxis hat zudem gezeigt, dass Kabel, welche in gefräste Böden eingelegt werden, häufig durch vorhandenes spitzes und scharfkantiges Gestein beschädigt werden.

Eine Aufgabe der Erfindung kann aus diesem Grunde darin gesehen werden, eine Vorrichtung und ein Verfahren zum Verlegen von Kabeln und/oder Leitungen bereitzustellen, welche die genannten Nachteile verhindert oder zumindest reduziert.

Die obige Aufgabe wird durch die Gegenstände gelöst, welche die Merkmale in den unabhängigen Ansprüchen 1 und 8 umfassen. Weitere vorteilhafte Ausgestaltungen werden durch die Unteransprüche beschrieben.

Die Erfindung betrifft eine Vorrichtung zum Verlegen von Kabeln und/oder Leitungen mit mindestens einem rotierbaren Fräsrad, welches zum Öffnen einer Furche in einer asphaltierten, steinigen und/oder anderweitig zumindest annähernd luft- und/oder wasserdicht versiegelten Bodenschicht ausgebildet ist. Die Erfindung zeichnet sich dadurch aus, dass die Vorrichtung eine dem Fräsrad in einer Bewegungsrichtung der Vorrichtung nachgeordnete und/oder mit dem Fräsrad kuppel- und/oder verstellbare und zum Verlegen von mindestens einem Kabel und/oder mindestens einer Leitung ausgebildete Verlegeeinrichtung mit einer Zuführeinrichtung für die zu verlegenden Kabel und/oder Leitungen umfasst, wobei die Verlegeeinrichtung gleichzeitig zur Materialrückverdichtung ausgebildet ist. Die zu fräsende Furche kann dabei je nach Ausführung des Fräsrades ebenso auch breiter und als Graben ausgebildet sein kann.

Es haben sich ebenso Ausführungsformen bewährt, in welchen die Verlegeeinrichtung durch zumindest abschnittweise im Querschnitt V-förmig zu einer zu bearbeitenden Bodenoberfläche zueinander geneigte Seitenflanken gekennzeichnet sind, so wie sie erfindungsgemäß in der Vorrichtung nach Anspruch 1 vorgesehen sind.

Durch die konstruktionsbedingte Ausgestaltung die Verlegeeinrichtung kann das gelockerte Bodenmaterial im Fahrbetrieb nach oben und/oder zur Seite hin verschoben werden. In weiteren Ausführungsformen ist es denkbar, dass die Verlegeeinrichtung für verschiedene Einsätze unterschiedlich schmal oder breit sowie unterschiedlich kurz oder lang ausgebildet ist.

Weiter hat sich bewährt, dass vermittels der Verlegeeinrichtung gelockertes Material während der Vorwärtsbewegung in Bewegungsrichtung in seitlich der gefrästen Furche entstandene Hohlräume und/oder unverdichtete Bereiche verschoben und rückverdichtet wird. Damit wird gewährleistet, dass die Tragfähigkeit der Tragschicht zumindest annähernd erhalten bleibt oder sogar verbessert wird. Hierdurch wird verhindert, dass durch die Fräsung unterhalb der versiegelten Bodenschicht Hohlräume oder unverdichtete Bereiche entstehen, welche dazu führen können, dass die darüber liegende versiegelte Bodenschicht beschädigt oder in Ihrer Funktionsweise bzw. Tragfähigkeit beeinträchtigt wird.

Ein fortgebildestes Ausführungsbeispiel zeichnet sich außerdem dadurch aus, dass die Verlegeeinrichtung mit mindestens einer Vibrationseinrichtung ausgebildet sein kann. Die Vibrationseinrichtung versetzt die Verlegeeinrichtung in Schwingung, wodurch die Durchdringung des Untergrunds leichter und damit schneller vollzogen werden kann. Auch kann die Vibrationseinrichtung insofern vorteilhaft sein, dass durch die Vibration der Verlegeeinrichtung eine besonders hohe Materialverdichtung erzielt wird und damit das Auftreten von Hohlräumen reduziert.

In der Praxis haben sich Ausführungen bewährt, wobei die Vibrationseinrichtung durch einen Pulsator und/oder einen Unwuchtmotor und/oder eine weitere alternative vibrationsgenerierenden Einrichtung ausgebildet sein kann.

Auch ist es vorgesehen, dass die Verlegeeinrichtung mit mindestens einer Zuführeinrichtung zum Einführen und anschließenden Ablegen mindestens eines Kabels und/oder mindestens einer Leitung in die gefräste Furche bestückt werden kann. In der Praxis haben sich außerdem Ausführungsformen der Zuführeinrichtung bewährt, wobei diese durch ein oder mehrere auf dem Rücken verlaufende, offene oder geschlossene kanalartige Führungen ausgebildet sein können, wie dies beispielhaft durch die DE 38 28 595 C2 beschrieben wird. Ergänzend könnte die Zuführeinrichtung über einen trichterförmigen Einführungsbereich für das mindestens eine Kabel und/oder die mindestens eine Leitung verfügen, um das Kabel bei der Zuführung nicht durch scharfkantige Seitenflächen zu beschädigen. Zudem könnten in der Zuführeinrichtung Rollen oder vergleichbare Mittel eine verbesserte Führung der Kabel und/oder Leitungen in der Zuführeinrichtung ermöglichen und den Reibungswiderstand reduzieren. Weiterhin haben sich Ausführungsformen verbreitet, in welchen die Zuführeinrichtung beabstandet von der Verlegeeinrichtung angebracht sein kann.

Auch ist es vorstellbar, dass die Zuführeinrichtung mit ein oder mehreren Aufnahmeeinrichtungen zur Aufnahme mindestens einer Vorratstrommel ausgebildet sein kann oder die Vorrichtung selbst über eine Aufnahmevorrichtung verfügt. Diese mindestens eine Vorratstrommel kann dabei mit mindestens einem zu verlegenden Kabel und/oder einer Leitung etc. bestückt sein.

Bei der Verlegung von Kabeln, Leitungen etc. haben sich Verlegetiefen von 50 cm bis 100 cm bewährt, wobei auch andere Ablegetiefen größer oder kleiner 50 cm beziehungsweise 100 cm denkbar sind. Auch kann es sein, dass das Kabel und/oder die Leitung etc. über unterschiedliche Durchmesser verfügen und das die Zuführeinrichtung an den jeweiligen Kabel- und/oder Leitungsdurchmesser angepasst werden kann.

Die Erfindung umfasst außerdem, dass die Verlegeeinrichtung über mindestens einen Aktor in einer relativen Höhe zur Bodenoberfläche und in der Neigung zu einem das Fräsrad aufnehmenden Rahmen verstellbar ist. Dabei kann der mindestens eine Aktor als Hydraulikzylinder und/oder durch ein anderweitiges Stellelement wie einen Antriebsmotor, Spindelantrieb etc. ausgebildet sein. Folglich wäre eine vom Fräsrad entkoppelte Justierung der Verlegeeinrichtung möglich, wobei die Verlegeeinrichtung fakultativ an die Fräs- bzw. Arbeitstiefe angepasst wird.

Zudem kann vorgesehen sein, dass die Verlegeeinrichtung über mindestens ein durch mindestens einen Aktor verstellbares Schieberelement verfügt, welches quer zur Längsachse der Fräsfurche in unterschiedlichen Winkelanstellungen positioniert werden kann und welches Schieberelement gefrästes und/oder anderes loses Bodenmaterial auf der Bodenoberfläche von der Fräsfurche in Bewegungsrichtung abschiebt. Weiterhin soll durch das mindestens eine Schieberelement verhindert werden, dass Bodenmaterial unplanmäßig in die Fräsfurche zurückgelangt. Auch hat das mindestens eine Schieberelement einen Glättungs- und Verdichtungseffekt des seitlich der Fräsfurche befindlichen Bodens und/oder Materials.

Überdies haben sich in der Praxis Ausführungen bewährt, wobei die Verlegeeinrichtung über mindestens einen kuppelbaren Adapter verfügt, welcher durch eine Kupplungseinrichtung mit einem Rahmen gekuppelt werden kann. Weiter kann vorgesehen sein, dass der an der Verlegeeinrichtung angebrachte Adapter beim Kupplungsvorgang vermittels einem an der Kupplungsvorrichtung angebrachten Hydraulikverschluss mit einem Trägergerät verbunden wird. Weiter könnte der Adapter mittels Gleitlagerung mit der Verlegeeinrichtung in Verbindung stehen. Eine Aufwärtsbewegung des als Hydraulikzylinder ausgebildeten Aktors könnte demnach durch die Gleitlagerung eine lineare Auf- und Abwärtsbewegung der Verlegeeinrichtung bewirken.

Die Vorrichtung könnte als Anbaugerät für verschiedene Trägergeräte wie Traktoren, Bagger, Lastkraftwagen oder andere landwirtschaftliche, bauwirtschaftliche Maschinen oder anderweitige Nutzfahrzeuge ausgelegt sein und mit dem Trägergerät verbunden werden.

Ebenso wäre es denkbar, dass die Vorrichtung über einen von einem Trägergerät unabhängigen motorischen Antrieb verfügt und/oder selbstständig bewegt werden kann. Zudem könnte die Vorrichtung so ausgeführt sein, dass eine an der Vorrichtung angebrachte Verlegeeinrichtung in eine bereits erstellte Furche eingesetzt wird und durch ein weiteres Trägergerät geführt wird oder unabhängig von einem Trägergerät einsetzbar ist.

Zudem könnte die Vorrichtung mit einer Schmiereinrichtung ausgestattet sein, welche ein selbstständiges Abschmieren der schmierbedürftigen Bauteile ermöglicht.

Denkbar wäre weiterhin, dass die Vorrichtung vor und/oder seitlich und/oder hinter dem jeweiligen Trägergerät positioniert werden kann und über mindestens eine Gelenkwelle mit einem Trägergerät korrespondiert, wobei das Fräsrad über die Gelenkwelle in Rotation versetzt wird. In der Praxis haben sich außerdem Ausführungsvarianten bewährt, wobei das Fräsrad hydraulisch oder motorisch angetrieben ist.

Weiterhin ist vorgesehen, dass das mindestens eine Fräsrad umfänglich mit auf der Mantelfläche angebrachten Fräszähnen bestückt ist, wobei die Fräszähne als aus Hartmetall gefertigte Rundschaftmeißel ausgebildet sein können. Um das Einsatzspektrum zu erweitern und den Materialverschleiß zu reduzieren kann es sein, dass die einzelnen Fräsmeißel aus Hartmetallen wie Wolframcarbid und/oder Kobalt hergestellt sind, wobei auch alternative widerstandsfähige Materialien möglich sind. Dadurch bedingt ergeben sich eine deutlich längere Nutzungsdauer der Meißel, ein gleichmäßiges Fräsbild und weiterhin eine vorteilhafte Kostenstruktur für den Betreiber, weil Wartungs- und Instandhaltungsintervalle verlängert werden können.

Zudem könnten die Fräsmeißel auf gekrümmten Elementen befestigt sein, welche mit den Meißeln bestückten Elemente wiederum am Fräsrad montiert werden. Denkbar ist auch, dass die Fräsmeißel direkt am Fräsrad montiert werden können. Auch könnten die Fräsmeißel gruppenweise oder einzeln auf den Elementen oder direkt am Fräsrad montiert sein.

Mittels der Fräsmeißel ist es möglich, selbst härteste Oberflächenversiegelungen wie Asphalt-, Beton-, Gesteinsschichten etc. zu fräsen beziehungsweise zu öffnen. Weiterhin ist es denkbar, dass das Fräsrad einsatzbedingt mit anderen Bearbeitungswerkzeugen oder Trennwerkzeugen bestückt werden kann. Zudem ist es möglich, dass das Fräsrad aus mehreren Teilelementen zusammensetzt wird. In der Praxis hat sich bewährt, dass das Fräsrad auch in größeren oder kleineren Dimensionierungen ausgeführt sein kann. Auch könnte weiterhin vorgesehen sein, dass das abgefräste Material neben oder in der erzeugten Fräsfurche abgelegt wird oder nach dem Fräsvorgang über mindestens eine Abführeinrichtung, wie ein Förderband oder dergleichen, abtransportiert wird.

Denkbar darüber hinaus ist, dass das Fräsrad horizontalachsig entgegen einer Längsrichtung der erzeugten Furche gelagert ist. Damit kann insbesondere gemeint sein, dass eine Lagerachse des rotierenden Fräsrades in etwa horizontal und in etwa quer zu einer Längsrichtung der erzeugten Furche angeordnet ist. In der Praxis hat sich weiterhin bewährt, dass die Vorrichtung mit mindestens einem trägerbildenden Rahmen ausgestaltet sein kann, in welchen zumindest annähernd mittig das horizontalachsig gelagerte Fräsrad angeordnet ist, wobei auch andere Positionen der Drehachse denkbar sind. Weiter könnte die Vorrichtung so ausgebildet sein, dass die Drehachse zwei voneinander unabhängige Fräsräder führt und welche unabhängig voneinander angetrieben werden könnten oder zusammenwirken. In der Praxis hat sich bewährt, dass der trägerbildende Rahmen durch massive Stahlelemente ausgebildet sein kann. Weiterhin hat sich bewährt, dass an dem trägerbildenden Rahmen eine Aufhängung vorgesehen ist, mittels welcher Aufhängung, vorzugsweise eine 3-Punkt-Aufhängung, ein Trägergerät angekoppelt werden kann. Folglich kann die Vorrichtung durch das Trägergerät von einem bestimmten Bodenniveau ausgehend angehoben und abgesenkt werden. Weiter hat sich bewährt, dass die Vorrichtung vorzugsweise ziehend fortbewegt werden kann, wobei auch eine Fortbewegung durch Schub möglich wäre. Ebenso könnte die Vorrichtung über einen Hydraulikanschluss verfügen und beim Verbinden mit einem Trägergerät automatisch oder manuell mit einem Hydraulikverschluss oder einer vergleichbaren Kupplungseinrichtung verbunden werden. Weiter wäre es denkbar, dass die Vorrichtung über eine hydraulische oder alternativ angetriebene Schwenk- oder Dreheinrichtung verfügt, wobei das Fräsrad in seiner Lage verändert werden kann und ein diagonales Fräsen ermöglicht wird.

Zum Schutz vor Umwelteinflüssen, aufschleuderndem gefrästem und ungefrästem Material als auch zum Schutz für Personen etc. kann das Fräsrad in einer bevorzugten Ausführungsform mit einer über dem Fräsrad angebrachten Abdeckung versehen werden. Die Abdeckung kann aus Stahlblech, hochfestem Kunststoff und/oder aus ein oder mehreren mattenähnlichen Schutzelementen gefertigt sein und wobei die Abdeckung zur Seite und/oder nach oben zu Wartungszwecken verschwenkt oder abgenommen werden kann. Auch könnte die Abdeckung über eine Wartungsöffnung verfügen, welche einen Zugang zur Drehwelle und dem Fräsrad mit den Fräsmeißeln ermöglicht.

Bewährt haben sich außerdem Ausführungsvarianten, wobei die Vorrichtung mit mindestens einem Wasseranschluss zur Reduzierung von Staubemissionen ausgestattet ist. Bei trockenem Bodenmaterial könnte der Boden beziehungsweise das Fräsrad mittels mindestens einer Wassersprüheinrichtung mit einem Wasserstrahl- und/oder -nebel benetzt werden, wodurch die Staubemission reduziert wird. Dabei könnte die Wassersprüheinrichtung vor und/oder über und/oder nach dem Fräsrad positioniert sein.

Weiter könnte die Vorrichtung zum Schutz des Fräsrades beziehungsweise der Fräsmeißel für eine schonende Lagerung bei Nichtgebrauch beziehungsweise Wartung mit einer schwenk-, verschränk-, schieb- oder kurbelbaren Stützeinrichtung versehen sein.

Nicht zuletzt könnte die Vorrichtung beziehungsweise die Abdeckung mit einem Transporthaken versehen sein, um die Vorrichtung unabhängig von einem Trägergerät zu transportieren oder zu positionieren. Auch die von der Vorrichtung lösbare Verlegeeinrichtung könnte darüber hinaus mit einem separaten Transporthaken und/oder einer weiteren Einrichtung zum An- und Abkuppeln der Verlegeeinrichtung an der Vorrichtung ausgestattet sein.

In weiteren Ausführungsbeispielen hat sich bewährt, dass das durch das Fräsrad abgefräste Material zu mindestens einer Materialabgabeeinrichtung transportiert wird. Dabei könnte schwereres abgefrästes Material wie größere Steine etc. und damit Material mit höherer Dichte gemäß der radial von der Rotationsachse des rotierenden Fräsrades nach außen gerichteten Zentrifugalkraft zur Außenseite des Fräsrades gedrängt werden und feinkörnigeres Material mit niedrigerer Dichte durch das Trägheitsprinzip verdrängen. Folglich wäre es möglich das Trägheitsprinzip als Trennungsprinzip anzuwenden, um gröberes und feineres Material während dem Fräsvorgang voneinander zu trennen. Weiter könnte der Großteil an gefrästem Material, feineres Material mit geringerer Dichte, zurück in die Fräsfurche befördert werden und gröberes Material mit einem hohen Anteil an groben Steinen seitlich neben der Fräsfurche abgelegt werden. Zur Vermeidung von Schäden des mindestens einen Kabels und/oder der mindestens einen Leitung könnte dabei das zu verlegende Kabel vollständig mit feinkörnigerem Material bedeckt werden und das gröbere Material erst anschließend rückverfüllt werden, wobei ebenso denkbar ist, dass das feinere Material auch ohne Kabel in die Fräsfurche rückverfüllt wird. Außerdem könnte die Materialabgabeeinrichtung über getrennte Materialabgabeeinrichtungen verfügen, wobei das feinkörnigere gefräste Material durch mindestens eine separate Materialabgabeeinrichtung oder dergleichen verfügt und das gröbere Material durch eine weitere Materialabgabeeinrichtung abgegeben wird.

In der Praxis hat sich bewährt, dass die mindestens eine Materialabgabeeinrichtung über ein oder mehrere Förderbänder, Förderketten oder anderweitige Einrichtungen zum Fördern von gefrästem Material verfügen kann, wobei das abgefräste Material seitlich neben und/oder hinter und/oder zurück in die Fräsfurche abgegeben werden kann. Weiter ist denkbar, dass die Materialabgabeeinrichtung zu allen Seiten hin manuell und/oder motorisch und/oder hydraulisch verschwenkbar ist. Weiterhin könnte die Materialabgabeeinrichtung zur Minderung von Staub, Lärm, aufgewirbelten Material etc. über einen oder mehrere Materialfänger verfügen, welche oberhalb und/oder seitlich etc. an der Materialabgabeeinrichtung installiert sind. Dabei könnten die Materialfänger über eine flexible und/oder starre Ausführungsform sowie über unterschiedliche Materialien verfügen und als mattenähnliche Schutzelemente ausgebildet sein. Weiterhin könnte auch die Materialabgabeeinrichtung über ein oder mehrere Wassersprüheinrichtungen zur Reduzierung der Staubemissionen verfügen, wobei das abgefräste Material mit Wasser benetzt wird.

Auch kann vorgesehen sein, dass das Fräsrad über mindestens eine sichelförmige, schwenkbare und/oder fixierte Räumeinrichtung verfügt, welche mit der Vorrichtung temporär oder dauerhaft in Verbindung steht und das Fräsrad hinter dem Fräsbereich flankiert. So kann bei Mitführung der Räumeinrichtung das gefräste Material nicht in die nach der Räumeinrichtung in Bewegungsrichtung gefräste Furche gelangen, Feinkörnigeres Material kann vermittels der Räumeinrichtung zurück in die Furche geführt werden und wobei das gröbere Material seitlich neben der Furche abgegeben wird. Außerdem ist vorgesehen, dass das während dem Fräsvorgang aufgewirbelte Material vermittels der Räumeinrichtung nicht in die Furche gelangen kann.

Zudem hat sich in der Praxis bewährt, dass die Staubemissionen durch die Räumeinrichtung merklich reduziert werden kann und außerdem eine stabilisierte Führung des Fräsrades bewirkt wird. Denkbar wäre außerdem, dass die Räumeinrichtung mit einer Zuführeinrichtung zum Verlegen von mindestens einem Kabel und/oder mindestens einer Leitung ausgestattet ist.

Weiterhin umfasst die Erfindung ein Verfahren zum Verlegen von Kabeln unter Verwendung der Vorrichtung nach einem der Ansprüche 1 bis 7. Dabei ist im Rahmen des Verfahrens vorgesehen, dass vermittels des mindestens einen Fräsrades eine Furche in Bewegungsrichtung erzeugt wird.

Weiter ist vorgesehen, dass die verstellbare und/oder kuppelbare mit einer Zuführeinrichtung zum Verlegen von Kabeln und/oder Leitungen ausgebildete Verlegeeinrichtung in Bewegungsrichtung bewegt wird. Zudem kann die Verlegeeinrichtung entlang der in der gefrästen Furche ausgebildeten Frässeitenflächen der versiegelten Bodenschicht und des unversiegelten Materials bewegt werden. Außerdem ist vorgesehen sein, dass die V-förmige Verlegeeinrichtung unversiegeltes Material in entstandene Hohlräume und/oder unverdichtete Bereiche auf der Frässohle und den Frässeitenflächen der versiegelten Bodenschicht und des unversiegelten Materials verschiebt und rückverdichtet. Nicht zuletzt ist vorgesehen, dass mindestens ein Kabel über die Verlegeeinrichtung auf der Frässohle abgelegt wird. Ebenso wäre denkbar, dass das mindestens eine Kabel zu einem späteren Zeitpunkt auf der Frässohle abgelegt wird.

Weiterhin hat sich bewährt, dass die Verlegeeinrichtung für seitlich in den Boden einzufräsende Furchen schwenkbar und eine Lageanpassung der Verlegeeinrichtung durch mindestens einen Aktor erfolgen kann.

Ebenso kann im Rahmen des Verfahrens vorgesehen sein, dass die Verlegeeinrichtung über eine Vibrationseinrichtung verfügt und die vibrierende Verlegeeinrichtung die Frässeitenflächen reibungsreduziert durchdringt und weiterhin eine Rückverdichtung von unversiegeltem Material in entstandene Hohlräume und/oder unverdichtete Bereiche erreicht wird. Durch das Vibrieren kann das zu verdichtende Material in Schwingung versetzt werden, wobei durch Kornumlagerungen die entstandenen Hohlräume und/oder unverdichteten Bereiche auf ein Minimum reduziert werden können. Weiterhin kann durch die Vibrationseinrichtung eine deutlich erhöhte Tiefenwirkung beim Verdichtungsvorgang herbeigeführt werden.

Auch kann das Verfahren einen Teilprozess umfassen, wobei nach dem Fräsvorgang das gefräste Material über eine Materialabgabeeinrichtung seitlich der gefrästen Furche oder in die gefräste Furche abgegeben werden kann.

In der Praxis hat sich außerdem bewährt, dass das Verfahren einen Tausch der Verlegeeinrichtung gegen eine Räumeinrichtung vorsehen kann. Dabei kann die Räumeinrichtung mittels der Kupplungseinrichtung mit der Vorrichtung verbunden werden. Die Räumeinrichtung kann im Zuge des Verfahrens dem Fräsrad nachgeführt werden. Dabei ist vorgesehen, dass die Räumeinrichtung eine nach dem Fräsrad in Bewegungsrichtung von Fräsmaterial befreite Furche erzeugt und wobei feinkörnigeres Material zumindest annähernd nicht in die Furche zurückgelangen kann. Grobes Material wie größere Steine oder dergleichen werden verfahrensbedingt über die mindestens eine Materialabgabeeinrichtung abgegeben und kann seitlich neben der Furche abgeführt werden.

In der Praxis hat sich außerdem bewährt, dass die Räumeinrichtung mit einer Zuführeinheit zum Verlegen von Kabeln und/oder Leitungen ausgebildet sein kann und dass nach dem Fräsvorgang die Räumeinrichtung die gefräste Furche von Fräsmaterial befreit und anschließend das mindestens eine Kabel und/oder die mindestens eine Leitung auf der Frässohle abgelegt wird.

Zuletzt sieht das Verfahren vor, dass das auf der Frässohle abzulegende Kabel und/oder die abzulegende Leitung über die Zuführeinrichtung vermittels Eigengewicht des Kabels und/oder der Leitung und/oder motorischer Unterstützung abgelegt werden kann.

Im Folgenden soll ein Ausführungsbeispiel die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Die Ausführungsformen, Beispiele und Varianten der vorhergehenden Absätze, die Ansprüche oder die folgende Beschreibung und die Figur, einschließlich ihrer Ansicht oder jeweiligen individuellen Merkmale, können unabhängig voneinander oder in beliebiger Kombination verwendet werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Schnittdarstellung einer Ausführungsform der Vorrichtung mit entkuppelter Verlegeeinrichtung.
Fig. 2 zeigt eine schematische Perspektivansicht, welche die Vorrichtung mit entkuppelter Verlegeeinrichtung darstellt.
Fig. 3 zeigt eine schematische Schnittdarstellung der Ausführungsform der Vorrichtung mit entkuppelter Verlegeeinrichtung und einem durch eine Zuführeinrichtung geführtem Kabel.
Fig. 4 zeigt eine schematische Schnittdarstellung einer Ausführungsform der Vorrichtung mit gekuppelter Verlegeeinrichtung und einem über die Zuführeinrichtung geführten Kabel.
Fig. 5 zeigt eine schematische Schnittdarstellung einer Ausführungsform einer Fräsvorrichtung mit Räumeinrichtung, entkuppelter Verlegeeinrichtung und einem über die Zuführeinrichtung geführtem Kabel.

Für gleiche oder gleich wirkende Elemente der Erfindung werden identische Bezugszeichen verwendet. Ferner werden der Übersicht halber nur Bezugszeichen in der Figur dargestellt, die für die Beschreibung der Figur erforderlich sind.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

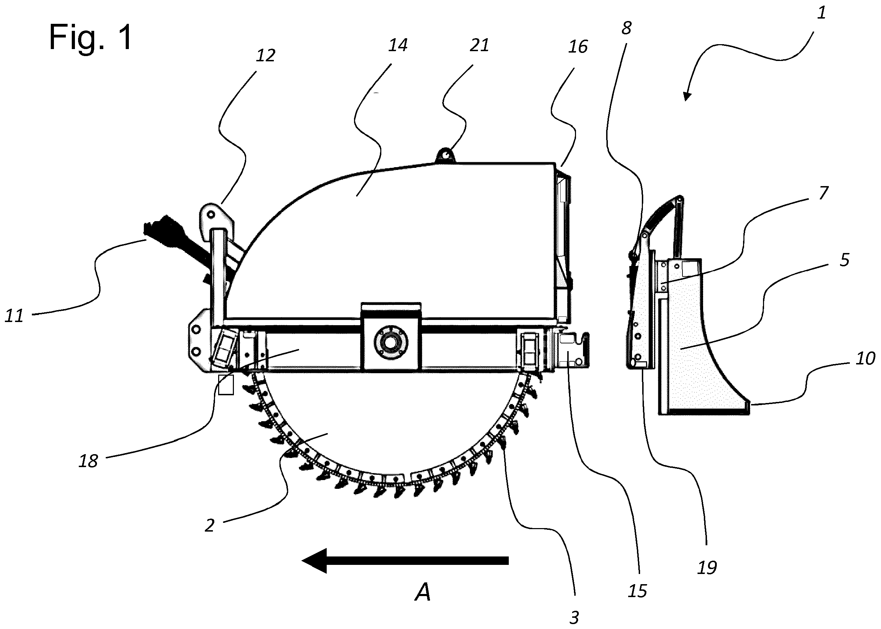

Die Fig. 1 zeigt in einer schematischen Schnittdarstellung eine Ausführungsform der erfindungsgemäßen Vorrichtung 1 zum Verlegen von Kabeln 9 und/oder Leitungen. Das Fräsrad 2 ist mit einer Vielzahl an Fräszähnen 3, vorzugsweise Fräsmeißeln bestückt, wobei die Fräszähne 3 in unterschiedlichen Winkeln angeordnet sind und folglich eine definierte Fräsbreite ausbilden. Das Fräsrad 2 ist mittels einer Drehachse im trägerbildenden Rahmen 18 gelagert. Der trägerbildende Rahmen 18 ist vorzugsweise durch massive Stahlelemente ausgebildet, in welchen mittig die Drehachse horizontal und entgegen der Längsachse der zu fräsenden Furche eingepasst ist. Die Vorrichtung 1 wird mittels einer Aufhängung 12 mit dem Trägergerät verbunden. In der vorliegenden Ausführungsform ist diese Aufhängung 12 als 3-Punkt-Aufhängung ausgebildet. Hierdurch ist das Anheben und Absenken der Vorrichtung 1 durch das Trägergerät möglich.

Das Fräsrad 2 wird beim Fräsvorgang über eine Gelenkwelle 11 mit einem korrespondierenden Trägergerät in Rotation im Uhrzeigersinn versetzt und in Bewegungsrichtung A fortbewegt. Die Fräsmeißel sind in definierten Abständen zueinander auf der Mantelfläche des Fräsrades 2 angeordnet und als Rundschaftmeißel ausgebildet, wobei die Rundschaftmeißel aus Wolframcarbid und Kobalt bestehen. Nach Verschleiß der Rundschaftmeißel können diese durch Verbindungen vom Fräsrad 2 gelöst und getauscht werden.

Eine auf der Vorrichtung 1 angebrachte Abdeckung 14 aus Stahlblech dient als Emissionsschutz als auch zur Reduzierung der Verletzungsgefahr sowie der Verhinderung vor Beschädigungen des Fräsrades. Um den Zugang zum Fräsrad 2 zu ermöglichen ist die Abdeckung 14 zu Wartungszwecken abnehmbar. Die Abdeckung 14 verfügt außerdem über einen Transporthaken 21, welcher ein problemloses Platzieren oder Lagern der Vorrichtung 1 ermöglicht.

Beim Fräsvorgang schlagen die am Fräsrad 2 montierten, rotierenden Fräsmeißel den Asphalt, Steinformationen etc. und das unversiegelte Material 6 auf, wobei das gelöste Material durch die Umdrehungsbewegung des Fräsrades 2 zu einer Materialabgabeeinrichtung 16 befördert wird. Schwereres und gröberes Material wird durch das Zentrifugalprinzip des Fräsrades nach außen befördert und verdrängt leichteres gelöstes Material. Hierdurch wird eine gewisse Materialtrennung herbeigeführt. Das gelöste schwerere und gröbere Material wird folglich neben der erzeugten Fräsfurche abgelegt.

Möglich ist aber auch eine direkte Abförderung des Materials in Materialtransporter oder das Rückbefördern des gefrästen Materials in die Fräsfurche. Das leichtere Material wird zurück in die Fräsfurche verbracht, wobei dieses auf das zu verlegende Kabel 9 als Abdeckmaterial aufgebracht wird und das Kabel 9 vollständig bedeckt. Das gröbere Material kann danach auf das Abdeckmaterial zurückverbracht werden oder anderweitig genutzt werden.

Fräsbedingte beziehungsweise umweltbedingte unter der Asphaltschicht entstandene Hohlräume führen zu einem Nachlassen der Verdichtung des unversiegelten Materials 6 unter der Asphaltschicht. Zur Abhilfe dieses Problems zeigt die Fig. 1 eine hinter dem Fräsrad 2 höhenverstellbare und V-förmig ausgebildete Verlegeeinrichtung 5, welche mittels einem an der Verlegeeinrichtung befindlichen Adapter 19 mit der Kupplungseinrichtung 15 verbunden werden kann, wobei die Kupplungseinrichtung 15 mit dem trägerbildenden Rahmen 18 in fester Verbindung steht.

Der sich über dem Adapter befindliche Aktor 8 steht dabei mittels Gleitlagerung mit der Verlegeeinrichtung 5 in Verbindung. Eine Aufwärtsbewegung des als Hydraulikzylinder ausgebildeten Aktors 8 bewirkt durch die Gleitlagerung eine lineare Abwärtsbewegung der Verlegeeinrichtung 5, wohingegen eine Abwärtsbewegung des Hydraulikzylinders eine ebenso lineare Aufwärtsbewegung der Verlegeeinrichtung impliziert. Die Verlegeeinrichtung 5 ist hierdurch unabhängig vom Fräsrad 2 in der Höhenjustierung einstellbar.

Aufgrund der konstruktiven Ausgestaltung ist es möglich, dass die Verlegeeinrichtung 5 auch unabhängig von der Vorrichtung 1 durch ein Kuppeln mit einem weiteren Trägergerät eingesetzt wird. Sofern die Verlegeeinrichtung 5 mit der Vorrichtung 1 durch die Kupplungseinrichtung 15 gekuppelt wird, verbindet sich der Hydraulikverschluss der Verlegeeinrichtung 5 mit der Hydraulikeinrichtung der Vorrichtung 1. Die Verlegeeinrichtung 5 wird durch die Vorwärtsbewegung der Vorrichtung 1 in Bewegungsrichtung A durch den gefrästen Boden gezogen, was zu einer Rückverdichtung von durch die Fräsung bedingten Hohlräumen durch die V-Form der Verlegeeinrichtung 5führtEine an der Verlegeeinrichtung 5 angebrachte Zuführeinrichtung 10 legt das von außen zugeführte Kabel 9 auf dem zumindest annähernden Niveau der Verlegeeinrichtung im Untergrund ab. Die Zuführeinrichtung ist hierbei kanalartig ausgebildet, wobei die Zuführeinrichtung 10 an die Kontur des Verlegeeinrichtung angepasst ist.

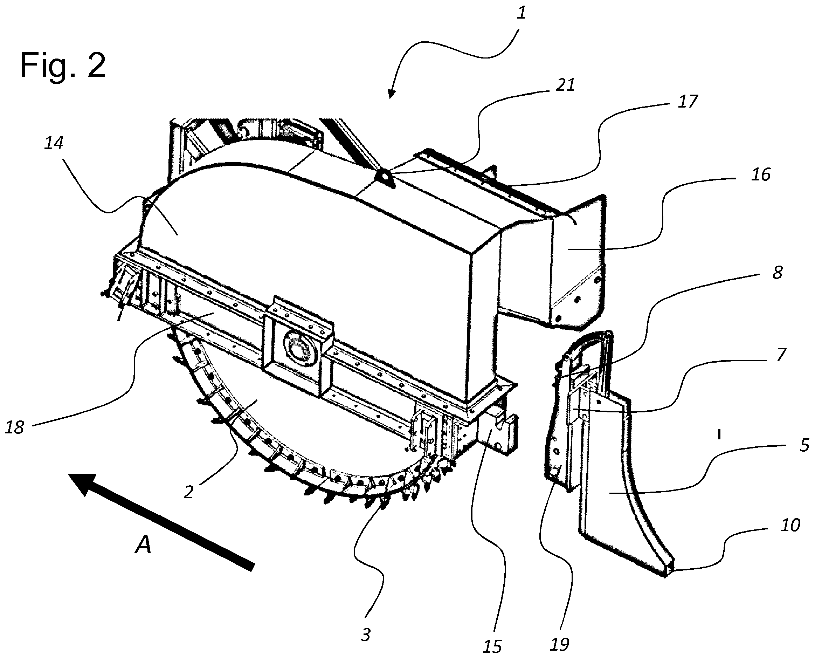

Die Fig. 2 zeigt eine schematische Perspektivansicht der erfindungsgemäßen Vorrichtung 1 und zeigt weiterhin die Materialabgabeeinrichtung 16 zur Abgabe des gefrästen Materials. Das durch die Fräsmeißel abgefräste Material wird mittels der Rotationsbewegung des Fräsrades 2 zur Materialabgabeeinrichtung 16 befördert und seitlich neben der Fräsfurche abgegeben. Zur Reduzierung von Staub und aufgewirbeltem Material ist die Materialabgabeeinrichtung 16 mit einem flexiblen Materialfänger 17 bestückt, welcher das vom Fräsrad 2 geförderte Material nahezu widerstandsfrei passieren lässt.

Die Vorrichtung 1 bzw. die Verlegeeinrichtung 5 ist in Fig. 2 vorzugsweise in gleicher Weise ausgebildet wie zuvor beschrieben und in Fig. 1 bereits gezeigt. Aus diesem Grund kann auf die oben stehende Beschreibung zur Fig. 1 verwiesen werden.

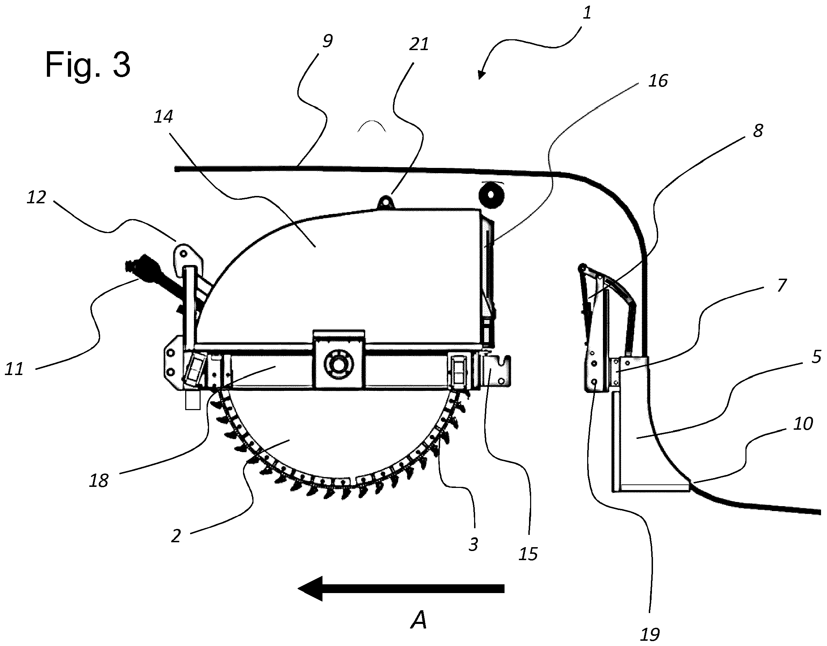

Die Fig. 3 zeigt eine weitere schematische Schnittdarstellung einer Ausführungsform der erfindungsgemäßen Vorrichtung 1. Eine unmittelbar hinter der Verlegeeinrichtung 5 angebrachte Zuführeinrichtung 10 legt ein von außen zugeführtes Kabel 9 und/oder eine Leitung in die zuvor gefräste Furche auf dem zumindest annähernden Niveau der Verlegeeinrichtung auf der Frässohle 20 ab. Die Zuführeinrichtung 10 ist dabei der Länge nach über den Rücken der Verlegeeinrichtung geführt und kanalartig ausgebildet.

Das auf der Frässohle 20 abzulegende Kabel 9 wird durch die Zuführeinrichtung 10 mittels Eigengewicht auf der Frässohle 20 der gefrästen Furche abgelegt. Die durch die von der Verlegeeinrichtung 5 geglättete Frässohle 20 verhindert, dass das über die Zuführeinrichtung 10 eingezogene Kabel 9 durch spitzes Gestein etc. beschädigt wird. Das Kabel 9 kann auch unabhängig von der Zuführeinrichtung 10 nach dem Einsatz der Verlegeeinrichtung 5 in die geglättete Frässohle 20 abgelegt werden. Die Vorrichtung 1 bzw. die Verlegeeinrichtung 5 ist in Fig. 3 nach Fig. 1 ausgebildet, so dass auf die vorherige Beschreibung zu Fig. 1 rückverwiesen werden kann.

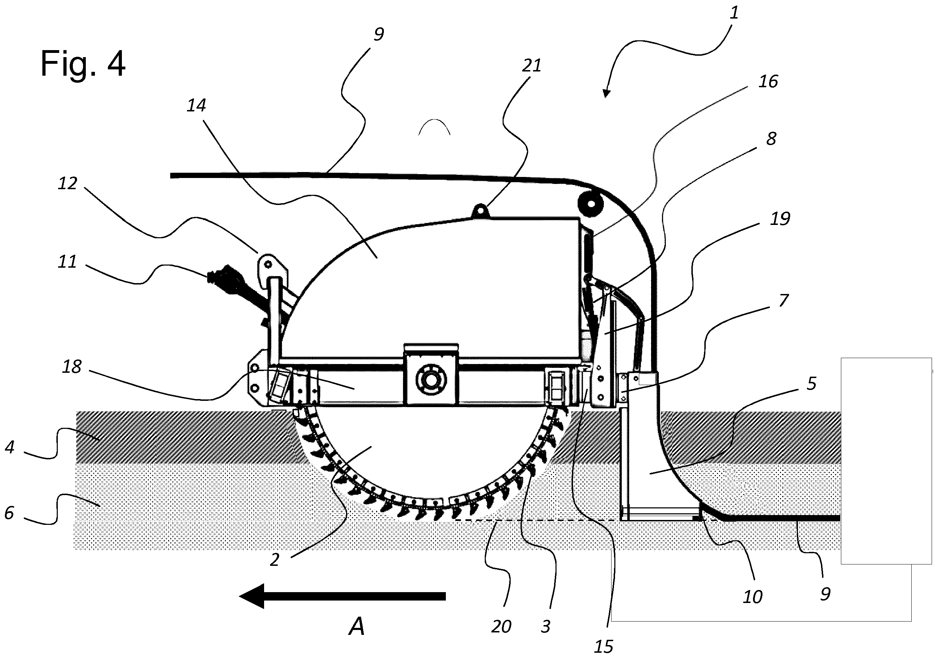

Die Fig. 4 zeigt eine schematische Schnittdarstellung einer Ausführungsform der Vorrichtung 1 mit gekuppelter Verlegeeinrichtung 5 und einem über die Zuführeinrichtung 10 geführten Kabel 9. Die Verlegeeinrichtung 5 ist über den Adapter 19 mit der Kupplungseinrichtung 15 der Vorrichtung 1 verbunden. Hierdurch ist die Hydraulikeinrichtung der Verlegeeinrichtung 5 mittels Hydraulikverschluss mit der Hydraulikeinrichtung der Vorrichtung 1 gekuppelt. In der Folge ist die Verlegeeinrichtung 5 in der Höhe und Neigung an die jeweiligen Bedingungen anpassbar. Beim Fräsvorgang wird sowohl die versiegelte Bodenschicht 4 wie Asphalt als auch das unversiegelte Material 6 durch das Fräsrad gefräst und das Kabel 9 durch die Zuführeinrichtung 10 auf dem annähernden Niveau der Verlegeeinrichtung auf der Frässohle 20 abgelegt. Die Vorrichtung 1 bzw. das Verlegeeinrichtung 5 ist nach Fig. 1 bis 3 ausgebildet, so dass auf die vorherige Beschreibung der Figuren rückverwiesen werden kann.

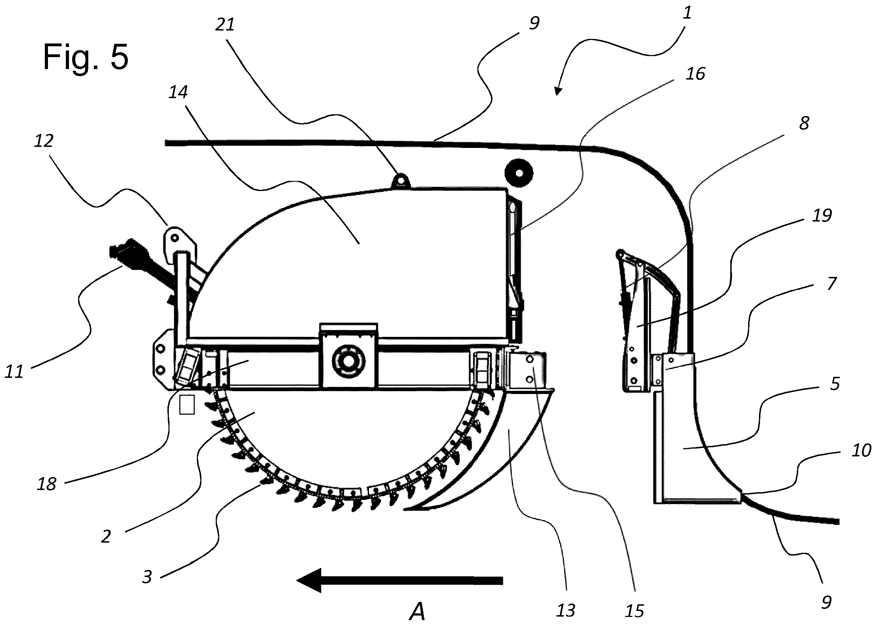

Die Fig. 5 zeigt eine schematische Schnittdarstellung einer Ausführungsform einer Vorrichtung 1 mit Räumeinrichtung 13, entkuppelter Verlegeeinrichtung 5 und einem über die Zuführeinrichtung 10 geführten Kabel 9. Die Vorrichtung 1 führt dabei zusätzlich eine an das Fräsrad 2 hinter dem Fräsbereich flankierte und über die Kupplungseinrichtung 15 fixierte Räumeinrichtung 13, wobei wahlweise zwischen Räumeinrichtung 13 oder Verlegeeinrichtung 5 gewechselt werden kann Die Räumeinrichtung dient dazu, dass grobes und mit größeren Steinen gefrästes Material zur Seite hin über die mindestens eine Materialabgabeeinrichtung abgegeben wird, wobei zugleich feineres gefrästes Material wieder zurück in die Furche vor der Räumeinrichtung 13 geleitet wird . Weiterhin bewirkt die Räumeinrichtung, dass durch den Fräsvorgang gelockertes Material nicht in die hinter der Räumeinrichtung 13 befindliche Furche gelangt. Weiter reduziert die Räumeinrichtung 13 das beim Fräsvorgang aufgewirbelte Material sowie Staubemissionen. Bei Nichtkoppelung der Räumeinrichtung 13 mit der Vorrichtung 1, kann das gefräste feine Material ungehindert wieder in die gefräste Furche abgegeben werden.

### Bezugszeichenliste

- 1: Vorrichtung
- 2: Fräsrad
- 3: Fräszähne
- 4: Versiegelte Bodenschicht
- 5: Verlegeeinrichtung
- 6: Unversiegeltes Material
- 7: Vibrationseinrichtung
- 8: Aktor
- 9: Kabel
- 10: Zuführeinrichtung
- 11: Gelenkwelle
- 12: Aufhängung
- 13: Räumeinrichtung
- 14: Abdeckung
- 15: Kupplungseinrichtung
- 16: Materialabgabeeinrichtung
- 17: Materialfänger
- 18: Rahmen
- 19: Adapter
- 20: Frässohle
- 21: Transporthaken

- A: Bewegungsrichtung

## Patentansprüche

1. Vorrichtung (1) zum Verlegen von Kabeln (9) und/oder Leitungen mit mindestens einem rotierbaren Fräsrad (2), welches zum Öffnen einer Furche in einer asphaltieren und/oder anderweitig zumindest annähernd luft- und/oder wasserdicht versiegelten Bodenschicht (4) ausgebildet ist, wobei die Vorrichtung (1) eine dem Fräsrad (2) in einer Bewegungsrichtung (A) der Vorrichtung (1) nachgeordnete und/oder mit dem Fräsrad (2) kuppel- und/oder verstellbare und zum Verlegen von mindestens einem Kabel (9) und/oder mindestens einer Leitung ausgebildete Verlegeeinrichtung (5) mit einer Zuführeinrichtung (10) für die zu verlegenden Kabel (9) und/oder Leitungen umfasst, die Verlegeeinrichtung (5) über mindestens einen Aktor (8) in der Höhe zur Bodenoberfläche verstellbar ist und **dadurch gekennzeichnet ist, dass** die Verlegeeinrichtung (5) über zumindest einen Aktor in der Neigung zu einem das Fräsrad (2) aufnehmenden Rahmen (18) verstellbar ist, dass die Verlegeeinrichtung (5) zumindest abschnittsweise mit im Querschnitt V-förmig zueinander geneigten Seitenflanken zur Materialverdichtung ausgebildet ist, wobei gelockertes Material vermittels der Verlegeeinrichtung (5) während der Vorwärtsbewegung in Bewegungsrichtung (A) in seitlich der gefrästen Furche entstandene Hohlräume und/oder in unverdichtete Bereiche verschoben und rückverdichtet werden kann und dass die Verlegeeinrichtung (5) gegen eine Räumeinrichtung tauschbar ausgebildet ist.

2. Vorrichtung nach Anspruch 1, bei welcher sich die Verlegeeinrichtung (5) aus mehreren in Länge, Breite, Winkeländerung sowie Materialstärke gleichartig oder abweichend ausgebildeten Segmenten zusammensetzt.

3. Vorrichtung nach einem der Ansprüche 1 oder 2, bei der an der Verlegeeinrichtung (5) mindestens eine Vibrationseinrichtung (7) anbringbar ist.

4. Vorrichtung nach einem der Ansprüche 1 bis 3, bei der die Zuführeinrichtung (10) zum Einführen und anschließenden Ablegen mindestens eines Kabels (9) und/oder mindestens einer Leitung in die gefräste Furche ausgebildet ist.

5. Vorrichtung nach einem der Ansprüche 1 bis 4, bei der die Verlegeeinrichtung (5) und die Räumeinrichtung (13) über mindestens einen kuppelbaren Adapter (19) verfügt, welcher Adapter (19) vermittels einer Kupplungseinrichtung (15) mit dem Rahmen (18) gekuppelt werden kann.

6. Vorrichtung nach einem der Ansprüche 1 bis 5, bei der das mindestens eine Fräsrad (2) umfänglich mit auf der Mantelfläche angebrachten Fräszähnen (3) bestückt ist, wobei die Fräszähne (3) als aus Hartmetall gefertigte Rundschaftmeißel ausgebildet sind.

7. Vorrichtung nach einem der Ansprüche 1 bis 6, bei der das Fräsrad (2) horizontalachsig entgegen einer Längsrichtung der erzeugten Furche gelagert ist, und/oder wobei eine Lagerachse des rotierenden Fräsrades (2) in etwa horizontal und in etwa quer zu einer Längsrichtung der erzeugten Furche angeordnet ist.

8. Verfahren zum Verlegen von Kabeln (9) und/oder Leitungen unter Verwendung einer Vorrichtung (1) nach einem der Ansprüche 1 bis 7, wobei vermittels des mindestens einen Fräsrads (2) der Vorrichtung (1) eine Furche in Bewegungsrichtung (A) erzeugt wird und die verstellbare und/oder kuppelbare mit einer Zuführeinrichtung (10) zum Verlegen von Kabeln (9) und/oder Leitungen ausgebildete Verlegeeinrichtung (5) in Bewegungsrichtung (A) entlang der in der gefrästen Furche ausgebildeten Frässeitenflächen der versiegelten Bodenschicht (4) und des unversiegelten Materials (6) bewegt wird und die V-förmige Verlegeeinrichtung (5) unversiegeltes Material (6) in entstandene Hohlräume und/oder unverdichtete Bereiche auf der Frässohle (20) und den Frässeitenflächen der versiegelten Bodenschicht (4) und des unversiegelten Materials (6) verschiebt und rückverdichtet sowie mindestens ein Kabel (9) über die Zuführeinrichtung (10) auf der Frässohle (20) abgelegt wird, wobei die Verlegeeinrichtung (5) für seitlich in den Boden einzufräsende Furchen schwenkbar ist und eine Lageanpassung der Verlegeeinrichtung (5) durch mindestens einen Aktor (8) erfolgt.

9. Verfahren nach Anspruch 8, wobei die Verlegeeinrichtung (5) über mindestens eine Vibrationseinrichtung (7) verfügt und die vibrierende Verlegeeinrichtung (5) die Frässeitenflächen reibungsreduziert durchdringt und eine Rückverdichtung von unversiegeltem Material (6) in entstandene Hohlräume und/oder unverdichtete Bereiche erreicht wird.

10. Verfahren nach einem der Ansprüche 8 oder 9, wobei nach dem Fräsvorgang das gefräste Material über mindestens eine Materialabgabeeinrichtung (6) seitlich der gefrästen Furche und/oder in die gefräste Furche abgegeben wird.

11. Verfahren nach einem der Ansprüche 8 bis 10, wobei gefrästes Material mit höherer Dichte gemäß der radial von der Rotationsachse des rotierenden Fräsrades (2) nach außen gerichteten Zentrifugalkraft zur Außenseite des Fräsrades (2) gedrängt wird und feinkörnigeres Material mit niedrigerer Dichte durch das Trägheitsprinzip verdrängt wird und es zu einer Trennung von gröberem und feinerem gefrästen Material während dem Fräsvorgang kommt und wobei das gefräste Material über mindestens eine Materialabgabeeinrichtung abgegeben wird.

12. Verfahren nach einem der Ansprüche 8 bis 11, wobei das auf der Frässohle (20) abzulegende Kabel (9) und/oder die abzulegende Leitung über die Zuführeinrichtung (10) vermittels des Eigengewichts des Kabels (9) und/oder der Leitung und/oder motorischer Unterstützung abgelegt werden.

## Claims

1. An apparatus (1) for laying cables (9) and/or lines, with at least one rotatable milling wheel (2), which is designed to cut a groove into an asphalted and/or an otherwise at least approximately air-tightly and/or water-tightly sealed ground layer (4), wherein the apparatus (1) comprises a laying device (5) with a feeding device (10) for the cables (9) and/or lines to be laid, the laying device (5) being arranged downstream from the milling wheel (2) in a direction of movement (A) of the apparatus (1), and/or being couplable with the milling wheel (2) and/or adjustable, and being designed for laying at least one cable (9) and/or at least one line, the laying device (5) being adjustable in height relative to the ground surface via at least one actuator (8), and being **characterised in that** the laying device (5) is adjustable in inclination relative to a frame (18) accommodating the milling wheel (2) via at least one actuator, and **in that** the laying device (5) is designed for material compaction with side shoulders, at least in some sections, that are inclined toward one another in a V-shaped cross section, wherein loosened material can be pushed and recompacted into cavities and/or uncompacted areas formed at the sides of the milled groove by means of the laying device (5) during the forward movement in the direction of movement (A), and **in that** the laying device (5) is designed to be exchangeable for a clearing device.

2. The apparatus according to claim 1, in which the laying device (5) is composed of a plurality of segments, which, in terms of length, width, angle change, and material thickness, are designed to be of the same or different kinds.

3. The apparatus according to one of the claims 1 or 2, in which at least one vibrating device (7) is mountable to the laying device (5).

4. The apparatus according to one of the claims 1 to 3, in which the feeding device (10) is designed to insert and subsequently deposit at least one cable (9) and/or at least one line in the milled groove.

5. The apparatus according to one of the claims 1 to 4, in which the laying device (5) and the clearing device (13) have at least one couplable adapter (19), which adapter (19) can be coupled to the frame (18) by means of a coupling device (15).

6. The apparatus according to one of the claims 1 to 5, in which the at least one milling wheel (2) is circumferentially equipped with milling teeth (3) mounted on the outer surface, wherein the milling teeth (3) are designed as round shank bits manufactured from cemented carbide.

7. The apparatus according to one of the claims 1 to 6, in which the milling wheel (2) is mounted on a horizontal axis relative to a longitudinal direction of the produced groove, and/or wherein a bearing shaft of the rotating milling wheel (2) is arranged to be approximately horizontal and approximately transverse to a longitudinal direction of the produced groove.

8. A method for laying cables (9) and/or lines with the use of an apparatus (1) according to one of the claims 1 to 7, wherein a groove is produced in the direction of movement (A) by means of the at least one milling wheel (2) of the apparatus (1), and the laying device (5), which is designed to be adjustable and/or couplable and which is designed with a feeding device (10) for laying cables (9) and/or lines, is moved in the direction of movement (A) along the milled side wall surfaces formed in the milled groove of the sealed ground layer (4) and the unsealed material (6), and the V-shaped laying device (5) pushes and recompacts unsealed material (6) into cavities and/or into uncompacted areas formed on the milled groove bottom (20) and in the milled side wall surfaces of the sealed ground layer (4) and the unsealed material (6), as well as at least one cable (9) being deposited via the feeding device (10) on the milled groove bottom (20), wherein the laying device (5) is swivelable for grooves to be milled into the ground in a lateral direction, and a position adjustment of the laying device (5) is carried out by at least one actuator (8).

9. The method according to claim 8, wherein the laying device (5) has at least one vibrating device (7), and the vibrating laying device (5) penetrates the milled side wall surfaces with reduced friction, and a recompaction of unsealed material (6) into formed cavities and/or uncompacted areas is achieved.

10. The method according to one of the claims 8 or 9, wherein the milled material is deposited on the side of the milled groove and/or in the milled groove via at least one material dispensing device (16) after the milling procedure.

11. The method according to one of the claims 8 to 10, wherein milled material with a greater density is displaced to the outer side of the milling wheel (2) subject to the centrifugal force directed radially outward from the rotational axis of the rotating milling wheel (2), and finer-grained material with lower density is displaced by the principle of inertia, and a separation of coarser and finer milled material results during the milling procedure, and wherein the milled material is dispensed via at least one material dispensing device.

12. The method according to one of the claims 8 to 11, wherein the cable (9) and/or line to be deposited on the milled groove bottom (20) via the feeding device (10) is deposited by the own weight of the cable (9) and/or by the own weight of the line and/or with motor support.

## Revendications

1. Dispositif (1) pour la pose de câbles (9) et/ou conduites, doté d'au moins une roue de fraisage (2) rotative conçue pour ouvrir un sillon dans une couche de sol (4) asphaltée et/ou enduite d'une autre manière, au moins approximativement étanche à l'air et/ou l'eau, ledit dispositif (1) comprenant un dispositif de pose (5) agencé en aval de ladite roue de fraisage (2), dans un sens de déplacement (A) dudit dispositif (1), et/ou conçu couplé à ladite roue de fraisage (2) et/ou ajustable et destiné à la pose d'au moins un câble (9) et/ou au moins une conduite, doté d'un dispositif d'alimentation (10) pour les câbles (9) et/ou conduites à poser, ledit dispositif de pose (5) étant ajustable en hauteur par rapport à la surface du sol, par au moins un actionneur (8), et **caractérisé en ce que** ledit dispositif de pose (5) est ajustable, par au moins un actionneur, dans l'inclinaison par rapport à un châssis (18) dans lequel ladite roue de fraise (2) est logée, que ledit dispositif de pose (5) est conçu doté au moins partiellement de flancs latéraux inclinés l'un vers l'autre en V à leur section, pour le compactage de matière, la matière ameublie pouvant être déplacée et re-compactée par le dispositif de pose (5) pendant la marche avant dans le sens de déplacement (A) dans les espaces creux apparus sur le côté du sillon fraisé et/ou dans des zones non compactées, et que ledit dispositif de pose (5) est conçu interchangeable avec un dispositif de dégagement.

2. Dispositif selon la revendication 1, dans lequel le dispositif de pose (5) se compose de plusieurs segments conçus similaires ou différents en longueur, largeur, changement d'angle ainsi qu'épaisseur de matière.

3. Dispositif selon l'une quelconque des revendications 1 ou 2, dans lequel au moins un appareil de mise en vibration (7) peut être fixé audit dispositif de pose (5).

4. Dispositif selon l'une quelconque des revendications 1 à 3, dans lequel le dispositif d'alimentation (10) est conçu pour introduire et déposer ensuite au moins un câble (9) et/ou au moins une conduite dans le sillon fraisé.

5. Dispositif selon l'une quelconque des revendications 1 à 4, dans lequel le dispositif de pose (5) et le dispositif de dégagement (13) disposent d'au moins un adaptateur (19) susceptible d'être couplé, lequel adaptateur (19) peut être couplé au châssis (18) au moyen d'un dispositif de couplage (15).

6. Dispositif selon l'une quelconque des revendications 1 à 5, dans lequel ladite au moins une roue de fraisage (2) est, sur son périmètre, pourvue de dents de fraisage (3) fixées à la surface de revêtement, lesdites dents de fraisage (3) étant conçues sous la forme de pics coniques réalisés en métal dur.

7. Dispositif selon l'une quelconque des revendications 1 à 6, dans lequel la roue de fraisage (2) est disposée dans l'axe horizontal à l'inverse d'un sens longitudinal du sillon créé, et/ou un axe de pivot de la roue de fraisage (2) en rotation étant agencé environ à l'horizontal et environ à la transversale d'un sens longitudinal dudit sillon créé.

8. Procédé de pose de câbles (9) et/ou conduites sous mise en oeuvre d'un dispositif (1) selon l'une quelconque des revendications 1 à 7, un sillon étant créé dans le sens de déplacement (A) au moyen de ladite au moins une roue de fraisage (2) du dispositif (1), et le dispositif de pose (5) susceptible d'être ajusté et couplé, conçu doté d'un dispositif d'alimentation (10) pour poser des câbles (9) et/ou conduites, étant déplacé dans le sens de déplacement (A) le long des surfaces latérales fraisées conçues dans le sillon fraisé, de la couche de sol enduite (4) et de la matière non enduite (6), et le dispositif de pose (5) en forme de V déplaçant et re-compactant de la matière non enduite (6) dans des espaces creux apparus et/ou zones non compactées sur le fond de la fraise (20) et les surfaces latérales de fraisage de la couche de sol enduite (4) et de la matière non enduite (6), ainsi qu'au moins un câble (9) étant déposé, par le biais du dispositif d'alimentation (10), sur le fond de la fraise (20), le dispositif de pose (5) étant pivotable pour les sillons à fraiser latéralement dans le sol et le dispositif de pose (5) adaptant sa position par au moins un actionneur (8).

9. Procédé selon la revendication 8, le dispositif de pose (5) disposant d'au moins un dispositif de mise en vibration (7) et ledit dispositif de pose (5) vibrant traversant les surfaces latérales de fraisage avec moins de frottement, et un re-compactage de matière non enduite (6) dans les espaces creux apparus et/ou zones non compactées étant atteint.

10. Procédé selon l'une quelconque des revendications 8 ou 9, la matière fraisée étant, après l'opération de fraisage, déposée par au moins un dispositif de dépose de matière (16) à côté du sillon fraisé et/ou dans le sillon fraisé.

11. Procédé selon l'une quelconque des revendications 8 à 10, la matière fraisée de densité plus élevée étant poussée vers le côté extérieur de la roue de fraisage (2), conformément à la force centrifuge dirigée vers l'extérieur radialement à l'axe de rotation de la roue de fraisage (2) en rotation, et la matière à grain plus fin, de densité réduite, étant repoussée selon le principe de l'inertie, et une séparation de la matière fraisée à gros grain de la matière à grain plus fin survenant au cours de l'opération de fraisage, et la matière fraisée étant déposée par le biais d'au moins un dispositif de dépose de matière.

12. Procédé selon l'une quelconque des revendications 8 à 11, le câble (9) à déposer sur le fond de la fraise (20) et/ou la conduite à déposer étant déposé par le biais du dispositif d'alimentation (10) au moyen du poids propre du câble (9) et/ou de la conduite, et/ou d'une aide motorisée.
